# EUROPÄISCHE PATENTSCHRIFT

(11) **EP 2 097 279 B1**
(45) Veröffentlichungstag und Bekanntmachung des Hinweises auf die Patenterteilung: **25.07.2018**
(21) Anmeldenummer: 07821363.4
(22) Anmeldetag: 16.10.2007
(51) Int. Cl.: B60G 17/044, B62K 25/04, F16F 9/04

(54) **SELBSTPUMPENDE NIVEAUREGULIERUNG**
SELF-PUMPING RIDE LEVEL CONTROL SYSTEM
REGULATION DE NIVEAU A AUTOPOMPAGE

(30) Priorität: 25.11.2006 DE 102006055757
(43) Veröffentlichungstag der Anmeldung: 09.09.2009
(73) Patentinhaber: Continental Teves AG & Co. OHG, 60488 Frankfurt (DE)
(72) Erfinder: KRAUSS, Hans-Peter, 30826 Garbsen-Frielingen (DE)
(86) Internationale Anmeldenummer: PCT/EP2007/060996
(87) Internationale Veröffentlichungsnummer: WO 2008/061849

(56) Entgegenhaltungen:
- EP-A- 0 033 839
- EP-A- 1 249 357
- WO-A-2005/108818
- DE-A1- 3 502 851
- DE-A1- 19 529 389
- DE-A1- 19 629 501
- US-A- 4 577 840

## Beschreibung

Die Erfindung betrifft eine selbstpumpende Feder- und Dämpfereinheit mit selbsttätiger Niveauregulierung für Fahrwerke von Fahrzeugen, insbesondere für Kraftfahrzeuge oder Motorräder, die mit einem Anlenkpunkt an der Karosserie und mit dem anderen Anlenkpunkt am Fahrwerk angelenkt ist und deren Dämpfungseinheit mindestens zwei durch ein durchströmbares Drosselventil verbindbare Arbeitsräume aufweist, die ein Dämpfungs- und/oder Federungsmedium enthalten, dass beim Ein- und Ausfedern des Fahrzeuges durch die Drosselventile gedämpft zwischen den Arbeitsräumen ausgetauscht wird, wobei die Feder- und Dämpfereinheit mindestens eine Pumpe aufweist, welche durch den durch das Ein- und Ausfedern des Fahrzeuges sich verändernden Abstand zwischen den Anlenkpunkten angetrieben wird und eine Druckerhöhung in dem Dämpfungs- und/oder Federungsmedium erzeugt, wodurch die Feder- und Dämpfereinheit bei veränderlicher Zuladung des Fahrzeuges ein festgelegtes Niveau beibehält, wobei die Pumpe im Wesentlichen aus zwei relativ zu einander beweglichen und einen Kompressionsraum verkleinernden Pumpenteilen besteht, von denen ein Pumpenteil mit dem einen Anlenkpunkt und das andere Pumpenteil mit dem anderen Anlenkpunkt so in Verbindung steht dass der beim Ein- und Ausfedern des Fahrzeuges sich verändernden Abstand zwischen den Anlenkpunkten als Kompressionshub auf den Abstand der Pumpenteile untereinander übertragen wird.

Solche selbstpumpenden Niveauregulierungen sind in Verbindung mit hydraulischen Dämpfern bekannt, insbesondere auch bei Luftfederungen mit hydraulischen Dämpfern.

Aus der DE 196 29 501 A1 ist beispielsweise ein Stoßdämpfer vom Selbstpump-Typ gemäß des Oberbegriffs des Patentanspruchs 1 bekannt, wobei auch hier der Stoßdämpfer hydraulisch ausgebildet ist.

Die DE AS 1 209 891 offenbart hierzu eine hydropneumatische Abfederung für Fahrzeuge, welche eine Niveauregelung für eine Gasfeder mit einer hydraulischen Stoßdämpfereinrichtung verbindet. Hierbei dient die Hydraulikflüssigkeit zur Übertragung der abzufedernden Kräfte auf das Gaspolster. Die Hydraulikflüssigkeit lässt sich mit Hilfe einer Kolben-Zylinder-Anordnung zwischen einem Vorratsbehälter und dem Flüssigkeitsraum des Federungsteiles hin- und herpumpen, wobei die Pumpbewegung durch die Einfederung, d.h. die Federungsbewegungen des Fahrzeuges erzeugt werden. Als Pumpenkammer ist dabei ein ringförmiger Raum zwischen einer Zylinderinnenwand und einer Kolbenstange vorgesehen, der über Einlass- und Auslassventile mit einem Vorratsbehälter und dem Flüssigkeitsraum verbunden ist.

Die DE 195 47 536 A1 offenbart ein selbstpumpendes hydropneumatisches Federbein mit innerer Nivearegulierung, bei dem durch die Federbewegung des Fahrzeuges Dämpfungsmittel von einer Niederdruckkammer in eine durch einen Kolben von dieser getrennten Hochdruckkammer gefördert wird und beide Kammern mit druckspeichernden Gaspolstern versehen sind. Auch hier wird die Pumpbewegung durch eine in einen Hohlraum der Kolbenstange eintauchende Pumpstange erzeugt, die durch ihre Anbindung an die übrigen Dämpferbauteile die Federbewegung des Fahrzeuges überträgt. Auch hier wird Öl wird gepumpt um die Niveaulage zu verschieben. Das eingeschlossene Gasvolumen wird nicht verändert - es wurde lediglich zuvor durch die Erhöhung der Zuladung komprimiert.

Diese in der Vergangenheit für PKW mit Luftfedersystemen / Hydropneumatischen Federsystemen fast ausschließlich eingesetzten hydraulische Dämpfer werden neuerdings mehr und mehr ersetzt durch Luftfeder- und Dämpfereinheiten, bei denen sowohl die Federung als auch die Dämpfung durch ein gasförmiges Medium erfolgt. Solche Luftfeder- und Dämpfereinheiten dienen als besonders komfortable Federungselemente in Fahrzeugen und vermitteln ein angenehmen Fahrgefühl bei einer Federung, die je nach Straßenverhältnissen zwischen einem "weichen" und "harten" Federungsverhalten angepasst werden kann.

Während jedoch die bisherigen Lösungen mit hydraulischen Dämpfern auch als einfache selbstpumpende hydropneumatische Federbeine mit innerer Nivearegulierung ausgeführt werden konnten, wie der Stand der Technik zeigt, so war dies bei reinen Gasfeder- und Dämpfereinrichtungen eher nicht der Fall. Bei letzteren wird in aller Regel eine Niveauregulierung durch eine separate Niveauregulierungsanlage durchgeführt, die neben den eigentlichen Gasfeder- und Dämpfereinrichtungen, also den Federelementen an den Fahrzeugrädern, eine Vielzahl von teilweise elektrisch betriebenen Zusatzeinrichtungen wie Pumpen, Speicher, Ventile etc. aufweist, die alle im Fahrzeug untergebracht werden müssen. Darüber hinaus sind die bisherigen einfachen Lösungen selbstpumpender, hydropneumatischer Federbeine mit hydraulischen Dämpfern für Gasdämpfer aufgrund der Kompressibilität des Gases nicht anwendbar.
Für die Erfindung bestand also die Aufgabe, eine einfache selbstpumpende Feder- und Dämpfereinheit mit selbsttätiger Niveauregulierung bereitzustellen, die insbesondere für Gasfeder- und Dämpfereinrichtungen einsetzbar ist, bei denen also sowohl Feder- als auch die Dämpfereinrichtungen mit einem kompressiblen Medium arbeiten, die eine kompakte Bauweise aufweist, die im Wesentlichen ohne die zusätzlichen Aggregate einer Niveauregulierungsanlage arbeitet, und die somit auch für kleinere Fahrzeuge und Zweiräder problemlos eingesetzt werden kann.
Gelöst wird diese Aufgabe durch die Merkmale des Hauptanspruchs. Weitere vorteilhafte Ausbildungen sind in den Unteransprüchen offenbart.
Bei der erfindungsgemäßen Feder- und Dämpfereinheit mit selbsttätiger Niveauregulierung ist zwischen mindestens einem zur Druckerhöhung in dem Dämpfungs- und/oder Federungsmedium dienenden Pumpenteil und dem zugehörigen Anlenkpunkt ein elastisches Verbindungselement so angeordnet, dass es den beim Ein- und Ausfedern des Fahrzeuges sich verändernden Abstand zwischen den Pumpenteilen, d.h. den Kompressionshub, mindestens teilweise elastisch kompensiert.
Ein solches elastisches Verbindungselement, welches den bei solch einer Konstruktion auf die Pumpenteile wirkenden Gesamthub zwischen den Anlenkpunkten mindestens teilweise federnd oder elastisch auffängt oder kompensiert, ermöglicht erst ein Pumpen von kompressiblem Dämpfungs- und/oder Federungsmedium sowie dessen Druckerhöhung. Dabei ist es unerheblich, ob der Gesamthub in seiner Wirkung auf das Pumpenteil übersetzt wird oder direkt wirkt. Dieser prinzipielle Unterschied beim Pumpen eines kompressiblen Mediums innerhalb eines Dämpfers mit einem durch die Fahrzeugbewegung vorgegebenem Kompressionshub im Vergleich zu einem Pumpen eines inkompressiblen Mediums unter gleichen Umständen innerhalb eines Dämpfers oder einer Feder wird anhand der folgenden Betrachtung deutlich:
Der Druck eines im Wesentlichen inkompressiblen Mediums wie Hydrauliköl steigt bereits bei minimaler Verkleinerung eines vorgegebenen Ausgangsvolumens beliebig hoch. Dadurch ist bei den im Stand der Technik bekannten selbstpumpenden hydropneumatischen Federbeinen mit hydraulischen Dämpfern und starrer Übertragung der Fahrzeugbewegung / starrer Übertragung der Hubes zwischen den Anlenkpunkten bereits ein leichtes Pendeln um die Null-Lage, also eine geringe Vertikalbewegung des Fahrzeugs von z.B. +/- 10 mm ausreichend, um Hydraulikflüssigkeit mit Hilfe einer Kolben-Zylinder-Anordnung bei jedem minimalem Pendeln unter Hochdruck zu setzen und dadurch umzupumpen.

Die Null-Lage, von der man bei solchen selbstpumpenden Systemen mit selbsttätiger Niveauregulierung bei einem "Pump- oder Regelfall" ausgeht, ist natürlich die anfängliche theoretische Ruhelage im Stand eines Fahrzeuges, die sich nach einer erheblichen Zuladung ergibt. Die Federn werden also belastet und samt Dämpfer zusammengedrückt, die Karosserie sinkt ab, das Fahrzeug geht "in die Knie". Um nun die Niveauregulierung durchzuführen, um also die Karosserie wieder auf die Höhe bzw. den Abstand zum Fahrwerk zu bringen, die sie ohne Zuladung einnimmt, muss das Fahrzeug gefahren werden. Durch das beim Fahren sich einstellende Ein- und Ausfedern des Fahrzeuges kann dann die Pumpe angetrieben werden, die die Druckerhöhung in dem Dämpfungs- und/oder Federungsmedium erzeugt und die Karosserie wieder anhebt.

Bei kompressiblen Medien wie Luft reicht das bereits genannte und bei mittelharten Federungen und Dämpfungen in Fahrwerken übliche Pendeln um die Nulllage als Kompressionshub aber bei weitem nicht aus, um einen genügend hohen Druck im gasförmigen Medium zu erzeugen, der ein Umpumpen bzw. ein Öffnen der Ventile zu einem Hochdruckraum und ermöglichen und damit die Karosserie wieder anheben würde. Um hier einen ausreichenden Kompressionshub zwischen zwei relativ zu einander beweglichen und einen Kompressionsraum verkleinernden Pumpenteilen zu erreichen, benötigt man nach einer erheblichen Zuladung also ein tiefes Einfedern bzw. Durchfedern, d.h. einen großen Hub zwischen den Anlenkpunkten einer Feder- und Dämpfereinheit.

Ein solches tiefes Einfedern aus der oben bereits genannten Null-Lage ist für eine Gasfeder, die auch nach der Zuladung noch relativ "weich" wäre zwar ohne weiteres möglich, es findet aber üblicherweise erst bei zunehmender Fahrtstrecke und nicht gleich beim Start des Fahrzeuges statt. Die Karosserie eines Fahrzeuges mit einem als Gasfeder- und Dämpfereinheit ausgebildeten selbstpumpenden System mit selbsttätiger Niveauregulierung kann also nicht bereits nach den ersten gefahrenen Metern durch minimales Pendeln um die Null-Lage wieder angehoben werden, wie dies bei hydraulischen Systemen der Fall ist, sondern würde eine in aller Regel längere Fahrtstrecke benötigen, bei der es auch zu tiefem Einfedern bzw. Durchfedern kommt und bei der die Gasfeder- und Dämpfereinheit in ihrer Vertikalbewegung auch einmal "auf Block" fahren könnte, so dass ein Einsetzen der Anschlagpuffer erfolgt.

Da aber die - bisher bei hydraulischen Systemen bekannte - starre Übertragung der Abstandsänderung zwischen den Anlenkpunkten auf die Pumpe zur Druckerhöhung (Anheben der Karosserie) bei einer Gasfeder- und Dämpfereinheit aufgrund des dort erforderlichen tiefen Einfederns zur Zerstörung der Pumpeneinheit führen könnte, setzt hier nun die erfindungsgemäße Lösung ein. Diese sieht vor, dass der beim Ein- und Ausfedern des Fahrzeuges sich verändernde Abstand zwischen den Pumpenteilen mindestens teilweise elastisch kompensiert wird. Damit wird im Zusammenwirken mit einer entsprechenden Dimensionierung der Einzelteile z.B. der sich beim Einfedern verändernde und auf die Pumpenteile übertragene Abstand bzw. Hub zwischen den Anlenkpunkten, d.h. die Länge des Einfederungsweges oder Kompressionshubes nur soweit ausgenutzt, bis ein genügend hoher Druck im kompressiblen Medium erreicht ist, der ein Umpumpen bzw. ein Öffnen der Ventile zu einem Hochdruckraum und das Anheben der Karosserie bewirkt. Ein weitergehendes Einfedern oder sogar ein Durchfedern bis zum Einsetzen der Anschlagpuffer wird dann nicht mehr auf die Pumpenteile übertragen sondern elastisch bzw. federnd aufgefangen. Die Pumpenteile sind damit von den Einfederungswegen - nicht von den Einfederungskräften - durch die Karosserie getrennt und können unabhängig von der Einfedertiefe störungsfrei arbeiten, ohne Schaden zu nehmen.

Erfindungsgemäß ist die Feder- und Dämpfereinheit als eine mit Druckluft arbeitende Luftfeder- und Dämpfereinheit ausgebildet, wobei mindestens einer der mit Druckluft gefüllten Arbeitsräume mindesten teilweise durch bewegliche Wände in Form eines Rollbalges begrenzt ist und bei der der Rollbalg mindestens teilweise auf den Konturen rotationssymmetrischer Körper abrollen. Mit einer solchen Ausführung lassen sich die Vorteile einer komfortablen und einstellbaren Federung und Dämpfung mittels gasförmiger Medien mit denen einer selbstpumpenden selbsttätigen Niveauregulierung innerhalb einer Feder- und Dämpfereinrichtung kombinieren. Eine solche Kombination ist im Stand der Technik bisher nur durch die Aggregation einer Vielzahl von separaten und teilweise elektrisch betriebenen Zusatzeinrichtungen wie Pumpen, Speicher, Ventile etc. erreicht worden.

Eine vorteilhafte Weiterbildung besteht darin, dass die Pumpe als Kolbenpumpe ausgebildet ist mit einem mit dem oberen Anlenkpunkt verbundenen Pumpkolben, der in einem mit dem unteren Anlenkpunkt verbundenen Pumpzylinder bewegbar ist, so dass die Druckerhöhung während der in der Druckstufe befindlichen Feder- und Dämpfereinheit erfolgt, also während des Einfederns des Fahrzeugs, d.h. während der Verringerung des Abstandes zwischen den Anlenkpunkten. Hierdurch ergibt sich eine einfache Konstruktion der Pumpe und ein guter Wirkungsgrad.

Eine weitere vorteilhafte Weiterbildung besteht darin, dass die beiden Arbeitsräume durch einen in einem Dämpferzylinder verschiebbaren Dämpferkolben getrennt werden, wobei der Dämpferzylinder mit einem Anlenkpunkt und der Dämpferkolben über eine hohle Kolbenstange mit dem anderen Anlenkpunkt verbunden ist und bei der die Kolbenpumpe innerhalb der hohlen Kolbenstange so ausgebildet ist, dass die hohle Kolbenstange als Pumpzylinder dient, in dem ein konzentrisch zur Kolbenstange ausgebildeter und über einen mit dem Dämpferzylinder verbundenen Stößel angetriebener Pumpkolben angeordnet ist. Durch eine solche konzentrische und Platz sparende Anordnung der wesentlichen Bauteile lässt sich die Baugröße reduzieren und auf ein vorbestimmtes "Packageing" im Fahrzeug anpassen.

Eine weitere vorteilhafte Weiterbildung besteht darin, dass die Feder- und Dämpfereinheit mindestens eine Ablasseinrichtung aufweist, welche den durch das Ein- und Ausfedern des Fahrzeuges sich verändernden Abstand zwischen den Anlenkpunkten angetrieben und/oder gesteuert wird und eine Druckerniedrigung in dem Dämpfungs- und/oder Federungsmedium erzeugt, wodurch die Feder- und Dämpfereinheit bei veränderlicher Zuladung des Fahrzeuges ein festgelegtes Niveau beibehält. Durch eine solche Ablasseinrichtung kann auf einfache Weise und abhängig vom "Höhenstand" der Karosserie das Absenken oder Ablassen der Karosserie eingeleitet werden.

Natürlich kann die Ablasseinrichtung auch als separate Ventil- oder Pumpenkonstruktion ausgebildet und extern, also außerhalb der Feder- und Dämpfereinheit etwa über ein Magnetventil angetrieben und über einen Niveausensor gesteuert werden.

Eine weitere vorteilhafte Weiterbildung besteht darin, dass der sich beim Ein- und Ausfedern des Fahrzeuges verändernde Abstand zwischen den Pumpenteilen, d.h. der Kompressionshub und die Länge der Verschiebung zwischen Ablasskolben und Ablasszylinder einstellbar sind. Dadurch kann die Feder- und Dämpfereinheit auf veränderte Grundbelastungen und zu erwartende Zuladungen für jeweils unterschiedliche Fahrzeuge eingestellt werden. Natürlich können die erforderlichen Einstellelemente oder die Betätigungselemente für diese Einstellung auch so nach außen geführt werden, dass sie an der Außenseite oder jedenfalls außerhalb der Feder- und Dämpfereinheit verstellt bzw. betätigt werden können. Mit einer solchen Ausbildung lassen sich beispielsweise Feder- und Dämpfereinheiten eines Zweirades auf die zu erwartende Zuladung voreinstellen, also etwa auf die Fahrzustände "Einzelfahrer", mit "Gepäck" oder mit "Gepäck und Sozius".

Eine weitere vorteilhafte Weiterbildung besteht darin, dass die Abmessungen der zwischen Stößel und Kolben angeordneten Schraubenfeder und/oder die Abmessungen der Schraubenfeder auf dem als Hülse ausgebildete Ablasszylinder sowie die Abmessungen der Anschläge und Aufnahmen für diese Federn so ausgebildet sind, dass letztere als zusätzliche Federelemente zur Steigerung der Progression der Feder- und Dämpfereinheit genutzt werden. Dadurch lässt sich die Feder- und Dämpfereinheit insgesamt sehr kompakt herstellen und in ihren Federungseigenschaften auch für kleinere Fahrzeuge konstruktiv gut anpassen.

Eine weitere vorteilhafte Weiterbildung besteht darin, dass die Feder- und Dämpfereinheit eine zweistufige Pumpe aufweist, welche durch den durch das Ein- und Ausfedern des Fahrzeuges sich verändernden Abstand zwischen den Anlenkpunkten angetrieben wird und eine Druckerhöhung in dem Dämpfungs- und/oder Federungsmedium erzeugt, wobei die zweistufige Pumpe so ausgebildet ist, dass die zweite Pumpenstufe erst dann angetrieben wird, wenn der Pumpkolbenweg bzw. der Kompressionshub der erste Stufe der Pumpe bereits vollständig ausgenutzt ist und somit die erste Stufe bereits "auf Anschlag" steht. Damit lässt sich die Karosserie eines Fahrzeuges mit einer mit Druckluft arbeitenden selbstpumpenden Luftfeder- und Dämpfereinheit mit selbsttätiger Niveauregulierung auch in den seltenen Fällen leicht und nach relativ geringer Fahrstrecke anheben, in denen entweder die Zuladung zu hoch ist und die die erste Stufe allein durch das Zusatzgewicht bereits im Stand "auf Anschlag" steht, oder auch dann, wenn nach langer Standzeit des Fahrzeuges durch z.B. Leckageverluste ein Absinken unter die Normhöhe bereits stattgefunden hat.

Eine besondere und Verwendung einer zwischen zwei Anlenkpunkten an Karosserie und Fahrwerk eines Fahrzeuges angelenkten ein oder mehrstufigen Pumpe der erfindungsgemäßen selbstpumpenden Feder- und Dämpfereinheit besteht darin, dass die Pumpe nicht nur innerhalb eines Federbeins bzw. innerhalb nur einer selbstpumpenden Feder- und Dämpfereinheit genutzt wird, sondern als separater Druckerzeuger an beliebiger Stelle zur selbsttätigen und durch das Ein- und Ausfedern des Fahrzeuges angetriebenen Druckerzeugung innerhalb einer Druckversorgungsanlage für eine Niveauregulierung. Dadurch kann innerhalb einer solchen z.B. ansonsten konventionellen Niveauregelung der elektrisch betriebene Kompressor ersetzt oder mindestens unterstützt werden.

Bei dieser vorteilhaften Verwendung ist also die "Pumpen-Technik" übernommen, nun aber als reine Fahrwerkspumpe gestaltet und ausgeführt, die als Versorgungseinheit für ein luftgefedertes Fahrzeug dienen kann und keinerlei Elektronik braucht. Diese Pumpe kann natürlich auch in Verbindung mit einer Gasfeder und einem hydraulischen Dämpfer in den Bauraum des hydraulischen Dämpfers eingebaut werden. Wird ein hydraulische Dämpfer zusammen mit einer Luftfeder verwendet, so kann die Fahrwerkspumpe an beliebiger Stelle zwischen Achse und Fahrzeugaufbau angebracht werden, also etwa parallel zum Dämpfer, parallel zur Feder, oder auch liegend unter dem Fahrzeugboden über Hebel angelenkt. Auch möglich ist eine Kombination aus Luftfeder mit integrierter Fahrwerkspumpe in Verbindung mit einem hydraulischen Dämpfer.

Es wird somit deutlich, dass die erfindungsgemäße Lösung für Luftfedern, für Luftfedern mit Öldämpfern, für Luftdämpfer, für Kombinationen aus Luftfedern und Luftdämpfern (Luftffeder-Dämpfer-Einheiten), für separate Fahrwerkspumpen, sowie für Kombinationen all dieser Feder- und Dämpfereinrichtungen untereinander einsetzbar ist, also überall da, wo Gas als kompressibles Medium als Feder- oder Dämpfungsmedium verwendet wird..

Die weiteren vorteilhaften Ausgestaltungen werden anhand eines Ausführungsbeispieles der gegenständlichen Erfindung näher erläutert. Es zeigen
- Fig. 1: Ein Motorrad mit einer erfindungsgemäßen Luftfeder- und Dämpfungseinheit
- Fig. 2: Eine erfindungsgemäße Luftfeder- und Dämpfungseinheit Einzelteil in der Zusammenstellung
- Fig. 3: die erfindungsgemäße Luftfeder- und Dämpfungseinheit gemäß Fig. 2 im Detail
- Fig. 4: Eine erfindungsgemäße Luftfeder- und Dämpfungseinheit mit einer zweistufigen Pumpe
- Fig. 5: die erfindungsgemäße Luftfeder- und Dämpfungseinheit gemäß Fig. 5 in detaillierter Form
- Fig. 6: die erfindungsgemäße Ausführung einer zwischen zwei Anlenkpunkten an Karosserie und Fahrwerk eines Fahrzeuges angelenkten zweistufigen Pumpe

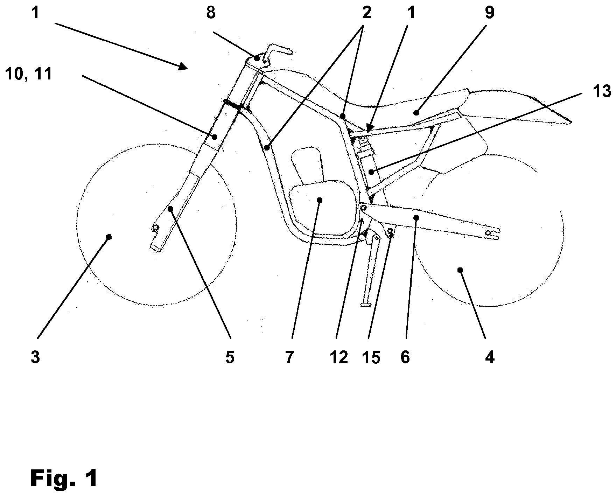

Die Fig. 1 zeigt in Form einer schematischen Darstellung ein Motorrad 1, bestehend im wesentlichen aus dem Rahmen 2, einem Vorderrad 3 und einem Hinterrad 4, einer Vorderradgabel 5, einer hinteren Schwinge 6, einem Antriebsaggregat 7, eine Lenker- und Instrumenteneinheit 8, sowie einem Sitz 9. Die Vorderradgabel 5 führt und lenkt dabei das Vorderrad 3, die Hinterradschwinge 6 führt das Hinterrad 4. Das "Fahrwerk" besteht also hier im Wesentlichen aus der Vorderradgabel 5 und der hinteren Schwinge 6.

In der Vorderradgabel 5 ist jeweils im rechten und linken Gabelast als integrales Bauteil eine Luftfeder- und Dämpfungseinheit 10 bzw. 11 vorhanden, welches die Stöße des Vorderrades federt und dämpft. Die Hinterradschwinge 6 ist über das Lager 12 schwenkbar am Rahmen 2 angelenkt und wird über eine hintere Luftfeder- und Dämpfungseinheit 13 gegenüber Schwingungsanregungen gefedert und gedämpft.

Die hintere Luftfeder- und Dämpfungseinheit 13 ist als selbstpumpende Feder- und Dämpfereinheit mit selbsttätiger Niveauregulierung ausgebildet und ist mit einem oberen Anlenkpunkt 14 an der Karosserie, d.h. am Rahmen des Motorrades und mit dem unteren Anlenkpunkt 15 am Fahrwerk bzw. an der Hinterradschwinge angelenkt.

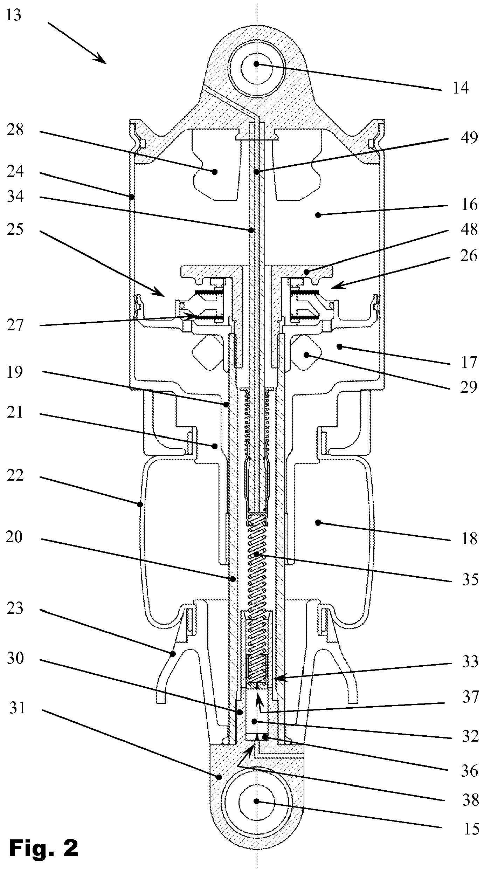

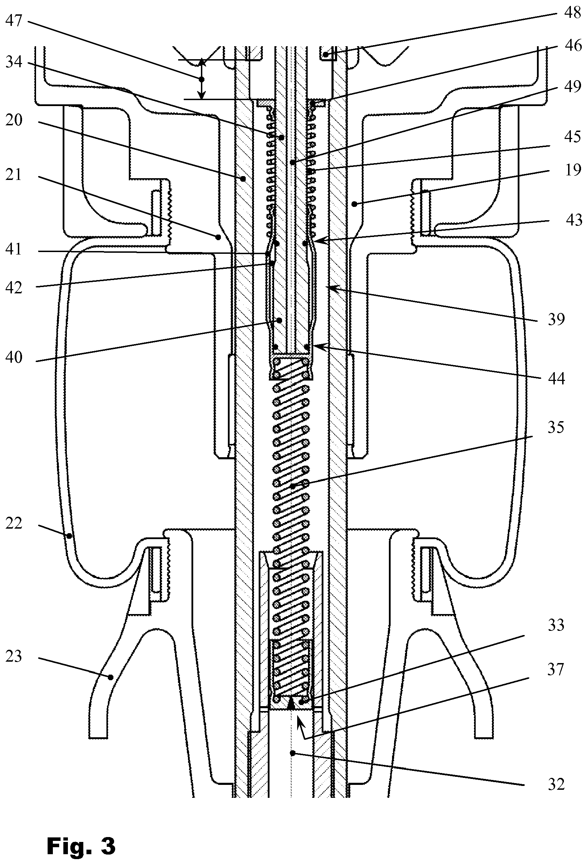

Fig. 2 zeigt die Luftfeder- und Dämpfungseinheit 13 als Einzelteil in der Zusammenstellung, Fig. 3 zeigt als vergrößerte Darstellung den mittleren Teil der Luftfeder- und Dämpfungseinheit 13. Fig. 2 und Fig. 3 sind der besseren Darstellung halber in der zugehörigen nachfolgenden Beschreibung gemeinsam zu betrachten. Die Luftfeder- und Dämpfereinheit 13 weist eine oberen mit Druckluft gefüllten Arbeitsraum 16, einen mittleren mit Druckluft gefüllten Arbeitsraum 17 und einen ebensolchen Arbeitsraum unteren 18 auf, wobei die Arbeitsräume 17 und 18 miteinander über den je nach Abmessung ggf. auch als Drossel wirkenden Ringspalt 19 zwischen der hohlen Kolbenstange 20 und der Kolbenstangenführung 21 in Verbindung stehen.

Der untere Arbeitsraum 18 ist teilweise durch eine bewegliche Wand in Form eines Rollbalges 22 begrenzt, welcher in seinem unteren Bereich beim Einfedern des Fahrzeuges auf den Konturen des rotationssymmetrischen Abrollkörpers 23 abrollt.

Die oberen Arbeitsräume 17 und 18 sind durch einen in einem Dämpferzylinder 24 verschiebbaren Dämpferkolben 25 getrennt, wobei der Dämpferzylinder 24 mit dem oberen Anlenkpunkt 14 in Verbindung steht und der Dämpferkolben 25 über die hohle Kolbenstange 20 an den unteren Anlenkpunkt 15 angebunden ist.

Im Dämpferkolben 25 sind zwei durchströmbare Drosselventile 26 und 27 angeordnet, durch die die Arbeitsräume 16 und 17 verbunden werden können, wenn beim Ein- und Ausfedern des Fahrzeuges der Druck auf der jeweiligen Hochdruckseite so ansteigt, das die Luft als Dämpfungs- und Federungsmedium durch die Drosselventile gedämpft zwischen den Arbeitsräumen 16 und 17 ausgetauscht wird. Die Drosselventile sind hier als Federscheibenventile ausgebildet, die unter relativ hoher Vorspannung auf ihren hier nicht näher dargestellten Ventilsitzen aufliegen. Beim Durchströmen entsteht durch Dissipation dann die gewünschte Dämpfungsarbeit.

Die Luftfeder- und Dämpfereinheit 13 weist weiterhin die Anschlagpuffer 28 für die Druckstufe und 29 für die Zugstufe auf, welche den Anschlag in den Extremlagen noch einmal abfedern, d.h. dann zum Einsatz kommen, wenn die Luftfeder- und Dämpfereinheit 13 durch Überlastung "auf Block" fährt.

Innerhalb der hohlen Kolbenstange 20 ist nun die Kolbenpumpe so ausgebildet ist, dass die in einer hülsenförmigen Verlängerung 30 des unteren Auges 31 aufgenommene und dadurch an ihrem unteren Ende verstärkte hohle Kolbenstange 20 als Pumpzylinder 32 dient, in dem ein konzentrisch zur Kolbenstange 20 ausgebildeter Pumpkolben 33 angeordnet ist. Der Pumpkolben 33 wird über einen mit dem Dämpferzylinder 24 verbundenen Stößel 34 angetrieben, ist jedoch an letzteren mit einer konzentrisch in der hohlen Kolbestange 20 zwischen Stößel 34 und Pumpkolben 33 angeordneten Schraubenfeder 35 elastisch angebunden.

Die Druckerhöhung im Kompressionsraum, d.h. im Pumpzylinder 32 erfolgt also während des Einfederns, d.h. in der Druckstufe der Feder- und Dämpfereinheit, wenn der Abstand zwischen den Anlenkpunkten 14 und 15 sich verkleinert. Die Verkleinerung des Kompressionsraumes kann soweit fortgesetzt werden, bis der gesamt Pumpkolbenweg ausgenutzt ist. Die im Wesentlichen aus Pumpzylinder 32 und Pumpkolben 33 bestehende Kolbenpumpe ist hierzu mit einem durch den und im Boden des Pumpzylinders gebildeten Anschlag 36 zur Begrenzung des Pumpkolbenweges / des Kompressionshubes versehen. Dabei wird erfindungsgemäß durch die Schraubenfeder 35 als elastisches Verbindungselement zwischen Stößel 34 und Pumpkolben 33 der beim Einfedern des Fahrzeuges sich verändernde Abstand zwischen den Pumpenteilen, nämlich dem Pumpkolben und dem Pumpzylinder mindestens teilweise elastisch kompensiert. Insbesondere nachdem der Pumpkolben 33 an den Anschlag 36 gefahren ist wird der evtl. verbleibende restliche Einfederungsweg durch Zusammendrücken der Feder 35 kompensiert, während die Kraft auf den Pumpkolben 33 gemäß der Federrate der Feder 35 erhalten bleibt.

Das bei Erreichen des Anschlages vorhandene komprimierte Gasvolumen steht dann unter einem so hohen Druck, dass ein Öffnen des im Pumpkolben 33 angeordneten Drossel-Rückschlagventils 37 erfolgt, wodurch eine Verbindung des komprimierten Volumens im Pumpzylinder 32 zum Arbeitsraum 16 geschaltet wird. Dadurch strömt das unter Hochdruck stehende Gas durch die Schraubenfeder 35 und die Ringspalte in der Kolbenstange 20 aus dem Pumpzylinder 32 in den Arbeitsraum 16 und die Karosserie bzw. der Motorrad-Rahmen wird mit jedem Pumpenhub etwas angehoben, nämlich solange, bis die Ablasseinrichtung in Aktion tritt, wie weiter unten beschrieben.

Zusammengefasst erfolgt also die Pumpfunktion dadurch, dass der Pumpkolben in der Kolbenstange des Gasfederdämpfers arbeitet und über eine Kompressionsfeder und eine Stößelstange bewegt wird. Beim Einfedern wird der Kompressionsraum verkleinert und die Luft darin verdichtet. Wenn der Druck der verdichteten Luft größer als der Innendruck der Luftfeder ist, öffnet das im Pumpkolben integrierte Ventil und das komprimierte Volumen wird in die Luftfeder gedrückt. Wenn der Pumpkolben seinen Hub vollständig beendet hat und am Fuß anschlägt, beginnt die Kompressionsfeder den weiteren Federweg der Luftfeder aufzunehmen. Je nach Auslegung der Feder kann auch bereits vor Anschlagen des Pumpkolbens ein Nachgeben der Feder eingestellt werden.

Beim nachfolgenden Ausfedern, d.h. dann, wenn sich der Abstand zwischen den Anlenkpunkten 14 und 15 wieder vergrößert, wird zunächst die Schraubenfeder 35 (Kompressionsfeder) entspannt. Danach vergrößert sich beim Ausfahren des Pumpkolbens 33 das Volumen im Kompressionsraum, d.h. im Pumpzylinder 32 und die sich darin befindende Restluft wird wieder entspannt.

Sinkt bei der Entspannung der Druck im Pumpzylinder 32 unter den Außenluftdruck, so öffnet sich das ebenfalls als Drossel-Rückschlagventil ausgebildete Ansaugventil 38 zum Kompressionsraum, wodurch Luft von außen in den Kompressionsraum strömt. Beim nächsten Einfedervorgang wiederholt sich der Ablauf.

Die Feder- und Dämpfereinheit weist eine Ablasseinrichtung 39 auf, welche ebenfalls durch den durch das Ein- und Ausfedern des Fahrzeuges sich verändernden Abstand zwischen den Anlenkpunkten 14 und 15 angetrieben und/oder gesteuert wird. Die Ablasseinrichtung 39 ist dabei als Ablassventil ausgebildet und besteht im Wesentlichen aus einem Ablasskolben 40, der in einem Ablasszylinder 41 verschiebbar ist. Dabei sind Ablasskolben 40 und Ablasszylinder 41 so ausgebildet ist, dass ein Ablassvolumen 42 als Ringvolumen / Ringraum zwischen Ablasskolben und Ablasszylinder entsteht.

Der Ablasskolben 40 wird dabei in vorteilhafter Weise durch das hier verdickte Ende des Stößels 34 gebildet. Der Ablasszylinder 41 umgibt den Stößel 34 in seinem unteren Bereich als Hülse innerhalb der Kolbenstange 20 und ist im Bereich des Ablasskolbens 40, teilweise aufgeweitet. Dadurch ist eine einfache und Raum sparende Konstruktion der Ablasseinrichtung möglich.

Der Ablasskolben 40 weist sowohl einlassseitig, d.h. in seinem oberen Bereich, als auch ablassseitig, d.h. in seinem unteren Bereich je einem Dichtring 43 und 44 zur Abdichtung des Ablassvolumen 42 (Ringraum / Ringvolumen) zwischen Ablasskolben 40 und Ablasszylinder 41 auf. Dabei dient der Ablasszylinder 41 als Dichtungssitz für den Ablasskolben 40, bzw. für dessen Dichtringe 43 und 44.

Der als Hülse ausgebildete Ablasszylinder 41 ist in einer Schraubenfeder 45 aufgenommen, welche an ihrem oberen Ende wiederum eine den Stößel 34 bzw. die Stößelstange umschließende konzentrische Anschlagplatte 46 aufweist. Die Anschlagplatte 46 stützt den Ablasszylinder 41 nach einem Ausfederweg 47 an dem mit dem Kolben bzw. der Kolbenstange verbundenen Anschlagteller 48 ab. Somit weist der als Hülse ausgebildete Ablasszylinder 41 einen elastischen Anschlag auf, welcher den Ablasszylinder 41 nach Anschlag gegenüber einer weiteren Verschiebung des abstützt.

In der in Fig. 2 und 3 gezeigten Ruhestellung herrscht im Ablassvolumen 42 (Ringraum / Ringvolumen) der gleiche Druck wie im Arbeitsraum 16. Dieser Druckausgleich erfolgt über den Ringspalt zwischen Ablasskolben 40 und Ablasszylinder 41, der den hochdruckseitiger Einlass in das Ablassvolumen 42 bildet, und durch den Innenraum der hohlen Kolbenstange 20.

Beim Ausfedern bewegen sich nun zunächst der Stößel 34 und damit der Ablasskolben 40 und der Ablasszylinder 41 nach oben, bis nach einem ersten konstruktiv für das Fahrzeug abgestimmten Ausfederweg 47 die Anschlagplatte 46 sich an den Anschlagteller 48 anlegt, somit den Ablasszylinder 41 elastisch abstützt und diesen an weitere Aufwärtsbewegung hindert.

Bei weiterem Ausfedern, d.h. bei weiterer Vergrößerung des Abstandes zwischen den Anlenkpunkten 14 und 15 wird die Schraubenfeder 45 (Ablassfeder) zusammen gedrückt. Sobald die dadurch ansteigende Federvorspannkraft größer wird, als die Kraft des Ablasskolbens 40 gegenüber dem Ablasszylinder 41, berechnet hier durch das Verhältnis der Fläche des Ablasskolbens multipliziert mit dem wirkenden Differenzdruck - (Luftfederinnendruck / Außenluftdruck), bewegt sich der Ablasskolben 40 relativ zum Ablasszylinder 41 nach oben. Durch diese relative Verschiebung des Ablasskolbens 40 gegenüber dem Ablasszylinder 41 wird zunächst die einlassseitige Öffnung des Ablassvolumens 42 zum Arbeitsraum 16 verschlossen, indem der obere Dichtring 43 sich mit dem Ablasskolben 40 in seinen Dichtsitz schiebt.

Bei weiterer Verschiebung nach oben wird der der untere Dichtring 44 mit dem Ablasskolben 40 aus seinen Dichtsitz bis in den teilweise aufgeweiteten Bereich des Ablasszylinders 41 geschoben. Damit öffnet sich die Verbindung vom Ablassvolumen 42 zu einem konzentrisch im Stößel 34 angeordneten und mit dem Außenluftdruck in Verbindung stehenden Ablasskanal 49. Damit erfolgt ein Druckausgleich nach außen - der Ablassvorgang.

Der verdickte Ablasskolben 40 schlägt danach mit seinem oberen Teil am Ablasszylinder 41 an und bei weiterem Ausfedern wird dann auch hier die Schraubenfeder 45 (Ablassfeder) weiter vorgespannt und nimmt den weiteren Federweg der Feder- und Dämpfereinheit elastisch auf. Hier wird damit erfindungsgemäß der restliche "Ausfederungsweg" also der restliche beim Ausfedern des Fahrzeuges sich verändernde (vergrößernde) Abstand zwischen den Pumpenteilen, nämlich hier dem Ablasskolben 40 und dem Ablasszylinder 41 teilweise elastisch kompensiert, während die Kraft auf den Ablasszylinder 41 gemäß der Federrate der Schraubenfeder 45 erhalten bleibt.

Beim folgenden Wiedereinfedern wird zunächst die Schraubenfeder 45 (Ablassfeder) entspannt. Dann bzw. dabei wird der Ablasszylinder 41 wieder relativ zur Ablasskolben 40 nach unten gedrückt. Zunächst schließt dann der untere Dichtring 44. Danach öffnet der obere Dichtring 43 wieder und es kommt wieder zum Druckausgleich zwischen dem Arbeitsraum 16 und dem Ablassvolumen 42. Dann ist alles bereit für den nächsten Ablasszyklus bzw. Pumpzyklus.

Die konstruktive vorgegebenen Längen des Kolbenhubs des Pumpkolbens 33 und des Steuerhubs /Kolbenhubs des Ablasskolbens 40 sind im Zusammenwirken mit den Abmessungen der übrigen Bauteilen maßgeblich für Beginn und Ende des selbsttätigen Pumpens und Ablassens, in diesem Sinne also für die (Steuer-) Zeiten. Damit können Beginn und Ende des selbsttätigen Pumpens und Ablassens auf einfachste Weise durch festlegen der Geometrie bzw. der Längen der Einzelteile eingestellt und oder auch von außen einstellbar gestaltet werden.

Bei ständigen Fahrzeugbewegungen/Karosseriebewegungen kann es, wenn die Amplituden entsprechend groß sind, passieren, dass bei jedem Zyklus jeweils einmal gepumpt und einmal abgelassen wird. Wenn relativ mehr Volumen abgelassen, als gepumpt wird, sinkt das Niveau entsprechend ab, bis pro Zyklus nur noch gepumpt wird. Dann steigt das Niveau wieder an, bis wieder die Ablassfunktion verstärkt wirkt. Dadurch ergibt sich eine statistische Mittellage entsprechend der Längenauslegung der Einzelteile im Zusammenwirken mit Fahrzeugfederung, -gewicht und -zuladung - eben eine automatische Niveauregulierung. Durch eine solche erfindungsgemäße Ausbildung der Feder- und Dämpfereinheit kann auf einfache Weise unabhängig von der Zuladung ein gewünschter "Höhenstand" der Karosserie eingeregelt werden.

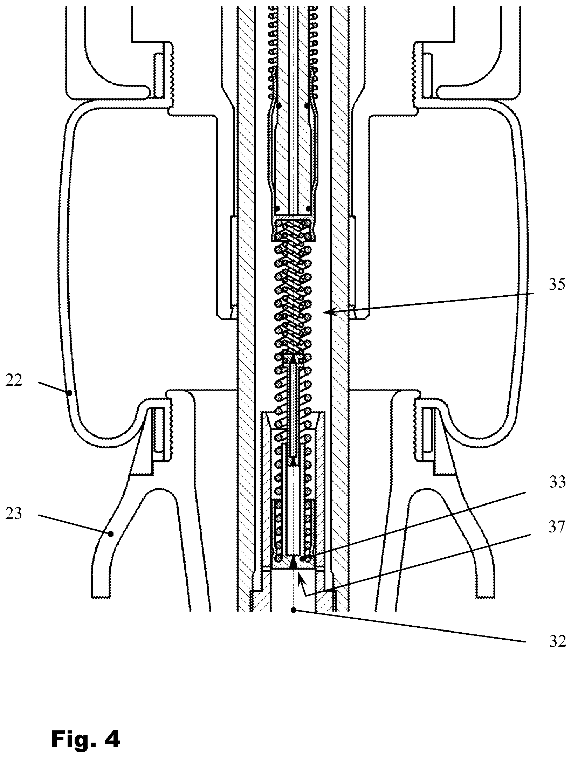

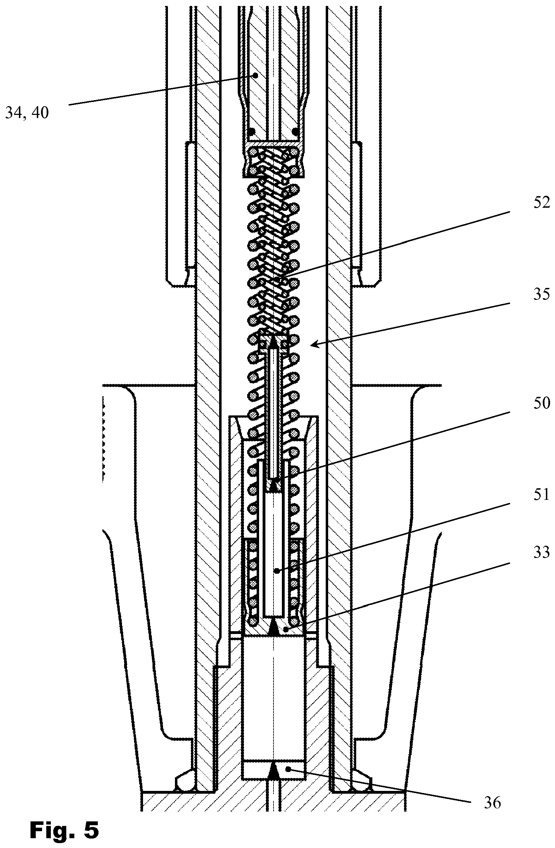

Fig. 4 und Fig. 5 zeigen in der Zusammenschau eine weitere Ausbildung der Feder- und Dämpfereinheit mit einer zweistufigen Pumpe, welche ebenfalls durch den durch das Ein- und Ausfedern des Fahrzeuges sich verändernden Abstand zwischen den Anlenkpunkten angetrieben wird und eine Druckerhöhung in dem Dämpfungs- und/oder Federungsmedium erzeugt.

Die zweistufige Pumpe ist dabei so ausgebildet, dass die im Wesentlichen aus Pumpkolben 50, Pumpzylinder 51 und Schraubenfeder 52 bestehende zweite Pumpenstufe erst dann angetrieben wird, wenn der Kompressionshub der ersten Stufe der Pumpe bereits vollständig ausgenutzt ist. Diese zweite Stufe funktioniert nach dem gleichen Prinzip wie die aus Pumpzylinder 32 und Pumpkolben 33 bestehende erste Stufe, arbeitet jedoch nur dann, wenn die Schraubenfeder 35 (Kompressionsfeder) der ersten Stufe zum Teil zusammengedrückt ist am Anschlag 36 liegt.

Dies kann beispielsweise geschehen, wenn bei hoher Zuladung, oder bei Leckageverlusten nach längerer Standzeit sich das Niveau der Karosserie soweit abgesenkt hat, dass der der Pumpkolben 33 bereits zu Block gedrückt wird. Das führt dazu, dass kein Ansaugvorgang durch die erste Pumpenstufe stattfinden kann und die Feder- und Dämpfereinheit nicht in ihre Regellage findet, aus der die Niveauregelung auf den ersten gefahrenen Metern starten kann. Für diesen Betriebszustand ist die zweite Pumpstufe installiert, die sozusagen als "Anfahrhilfe" bei extrem niedrigem Niveau dient und in jedem Fall sicherstellt, dass das gewünschte Niveau angefahren werden kann.

Für die konstruktive Ausführung der hier gezeigten Feder- und Dämpfereinheit mit einer zweiten Pumpstufe ist nun der Pumpkolben 33 der ersten Stufe als Hohlzylinder und damit in seinem Innenteil gleichzeitig als konzentrisch angeordneter Pumpzylinder 51 ausgebildet. Innerhalb des hohlen Pumpkolbens 33 ist nun der konzentrisch ausgebildete Pumpkolben 50 der zweiten Stufe angeordnet. Der Pumpkolben 50 wird ebenfalls über den Stößel 34 angetrieben, ist jedoch an letzteren mit einer in der konzentrischen Schraubenfeder 35 zwischen Stößel 34 und Pumpkolben 50 angeordneten Schraubenfeder 52 elastisch an den Stößel 34 angebunden. Auch der Pumpkolben 50 ist mit einem hier nicht näher dargestellten Drosselrückschlagventil versehen, welches als Ansaugventil dient. Die zwei Pumpenstufen sind damit Raum sparend in Reihe geschaltet und konzentrisch innerhalb der hohlen Kolbenstange angeordnet.

Wenn die erste Stufe arbeitet, wird die zweite Stufe lediglich von der gepumpten Luft durchströmt.

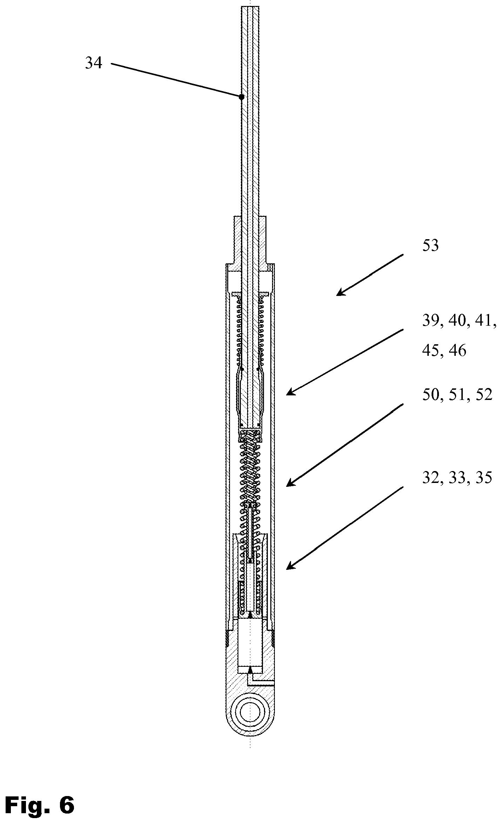

Fig. 6 zeigt die erfindungsgemäße Ausführung einer zwischen zwei Anlenkpunkten an Karosserie und Fahrwerk eines Fahrzeuges angelenkten zweistufigen Pumpe einer selbstpumpenden Feder- und Dämpfereinheit, wie sie in den vorhergehenden Ausführungsbeispielen näher dargestellt wurde, als zweistufige Fahrwerkspumpe 53 zur Verwendung für eine selbsttätige und durch das Ein- und Ausfedern des Fahrzeuges angetriebenen Druckerzeugung innerhalb einer beliebigen Druckversorgungsanlage für eine Niveauregulierung.

Es handelt sich hierbei also um lediglich das Innenteil der vorher beschriebenen Ausführung, welches im Wesentlichen aus dem Stößel 34 nebst Pumpzylinder 32, Pumpkolben 33, der Schraubenfeder 35 für die erste Pumpstufe, aus dem Pumpkolben 50, Pumpzylinder 51 und Schraubenfeder 52 der Zweiten Pumpstufe, sowie aus Ablasseinrichtung 39 nebst Ablasskolben 40, Ablasszylinder 41, Schraubenfeder 45, Anschlagplatte 46, Anschlagteller 48 und den jeweils zugehörigen Ventilen besteht. Diese Ausführung ist als reine Fahrwerkspumpe gestaltet, braucht keinerlei Elektronik und kann als Luftversorgungseinheit Versorgungseinheit für ein beliebiges luftgefedertes Fahrzeug dienen.

### Bezugszeichenliste

### (Teil der Beschreibung)

- 1: Motorrad
- 2: Rahmen
- 3: Vorderrad
- 4: Hinterrad
- 5: Vorderradgabel
- 6: Hintere Schwinge
- 7: Antriebsaggregat
- 8: Instrumenteneinheit
- 9: Sitz
- 10: Luftfeder- und Dämpfungseinheit
- 11: Luftfeder- und Dämpfungseinheit
- 12: Lager
- 13: Luftfeder- und Dämpfungseinheit
- 14: Anlenkpunkt
- 15: Anlenkpunkt
- 16: Arbeitsraum
- 17: Arbeitsraum
- 18: Arbeitsraum
- 19: Ringspalt
- 20: Kolbenstange
- 21: Kolbenstangenführung
- 22: Rollbalg
- 23: Abrollkörper
- 24: Dämpferzylinder
- 25: Dämpferkolben
- 26: Drosselventil
- 27: Drosselventil
- 28: Anschlagpuffer
- 29: Anschlagpuffer
- 30: Hülsenförmige Verlängerung
- 31: Unteres Auge
- 32: Pumpzylinder
- 33: Pumpkolben
- 34: Stößel
- 35: Schraubenfeder
- 36: Anschlag
- 37: Drossel-Rückschlagventil
- 38: Ansaugventil
- 39: Ablasseinrichtung
- 40: Ablasskolben
- 41: Ablasszylinder
- 42: Ablassvolumen
- 43: Dichtring
- 44: Dichtring
- 45: Schraubenfeder
- 46: Anschlagplatte
- 47: Ausfederweg
- 48: Anschlagteller
- 49: Ablasskanal
- 50: Pumpkolben
- 51: Pumpzylinder
- 52: Schraubenfeder
- 53: Zweistufige Fahrwerkspumpe

## Patentansprüche

1. Selbstpumpende Feder- und Dämpfereinheit (13) mit selbsttätiger Niveauregulierung für Fahrwerke von Fahrzeugen, insbesondere für Kraftfahrzeuge oder Motorräder (1), die mit einem Anlenkpunkt (14) an der Karosserie und mit dem anderen Anlenkpunkt (15) am Fahrwerk angelenkt ist und deren Feder- oder Dämpfungseinheit (13) mindestens zwei durch ein durchströmbares Drosselventil (26, 27) verbindbare Arbeitsräume (16, 17 , 18) aufweist, die ein Dämpfungs- und/oder Federungsmedium enthalten, dass beim Ein- und Ausfedern des Fahrzeuges durch die Drosselventile (26, 27) gedämpft zwischen den Arbeitsräumen (16, 17) ausgetauscht wird, wobei die Feder- und Dämpfereinheit (13) mindestens eine Pumpe aufweist, welche durch den durch das Ein- und Ausfedern des Fahrzeuges sich verändernden Abstand zwischen den Anlenkpunkten (14, 15) angetrieben wird und eine Druckerhöhung in dem Dämpfungs- und/oder Federungsmedium erzeugt, wodurch die Feder- und Dämpfereinheit (13) bei veränderlicher Zuladung des Fahrzeuges ein festgelegtes Niveau beibehält, wobei die Pumpe im Wesentlichen aus zwei relativ zu einander beweglichen und einen Kompressionsraum verkleinernden Pumpenteilen (32, 33) besteht, von denen ein Pumpenteil (33) mit dem einen Anlenkpunkt (14) und das andere Pumpenteil (32) mit dem anderen Anlenkpunkt (15) so in Verbindung steht dass der beim Ein- und Ausfedern des Fahrzeuges sich verändernden Abstand zwischen den Anlenkpunkten (14, 15) als Kompressionshub auf den Abstand der Pumpenteile (32, 33) untereinander übertragen wird, wobei zwischen mindestens einem Pumpenteil (33) und dem zugehörigen Anlenkpunkt (14) ein elastisches Verbindungselement (35) so angeordnet ist, dass es den beim Ein- und Ausfedern des Fahrzeuges sich verändernden Abstand zwischen den Pumpenteilen (32, 33) mindestens teilweise elastisch kompensiert, **dadurch gekennzeichnet, dass** die Feder- und Dämpfereinheit (13) als eine mit Druckluft arbeitende Luftfeder- und Dämpfereinheit ausgebildet ist, wobei mindestens einer der mit Druckluft gefüllten Arbeitsräume (18) mindesten teilweise durch bewegliche Wände in Form eines Rollbalges (22) begrenzt ist und bei der der Rollbalg (22) mindestens teilweise auf den Konturen rotationssymmetrischer Körper (23) abrollen.

2. Selbstpumpende Feder- und Dämpfereinheit (13) nach Anspruch 1, **dadurch gekennzeichnet, dass** die Pumpe als Kolbenpumpe ausgebildet ist mit einem mit dem oberen Anlenkpunkt (14) verbundenen Pumpkolben (33), der in einem mit dem unteren Anlenkpunkt (15) verbundenen Pumpzylinder (32) bewegbar ist, so dass die Druckerhöhung während der in der Druckstufe befindlichen Feder- und Dämpfereinheit (13) erfolgt.

3. Selbstpumpende Feder- und Dämpfereinheit (13) nach Anspruch 1 oder 2, **dadurch gekennzeichnet, dass** die beiden Arbeitsräume (16, 17) durch einen in einem Dämpferzylinder (24) verschiebbaren Dämpferkolben (25) getrennt werden, wobei der Dämpferzylinder (24) mit einem Anlenkpunkt (14) und der Dämpferkolben (25) über eine hohle Kolbenstange (20) mit dem anderen Anlenkpunkt (15) verbunden ist und bei der die Kolbenpumpe innerhalb der hohlen Kolbenstange (20) so ausgebildet ist, dass die hohle Kolbenstange (20) als Pumpzylinder (32) dient, in dem ein konzentrisch zur Kolbenstange (20) ausgebildeter und über einen mit dem Dämpferzylinder (24) verbundenen Stößel (34) angetriebener Pumpkolben (33) angeordnet ist.

4. Selbstpumpende Feder- und Dämpfereinheit (13) nach Anspruch 1 bis 3, **dadurch gekennzeichnet, dass** das elastische Verbindungselement als konzentrisch in der hohlen Kolbestange (20) zwischen Stößel (34) und Kolben (33) angeordnete Schraubenfeder (35) ausgebildet ist.

5. Selbstpumpende Feder- und Dämpfereinheit (13) nach Anspruch 1 bis 4, **dadurch gekennzeichnet, dass** der Pumpkolben (33) ein zu einem der Arbeitsräume (16) öffnendes Drossel-Rückschlagventil (37) aufweist.

6. Selbstpumpende Feder- und Dämpfereinheit (13) nach Anspruch 1 bis 5, **dadurch gekennzeichnet, dass** die Kolbenpumpe mit einem Anschlag (36) zur Begrenzung des Pumpkolbenweges / des Kompressionshubes versehen ist.

7. Selbstpumpende Feder- und Dämpfereinheit (13) nach Anspruch 1 bis 6, **dadurch gekennzeichnet, dass** der zwischen Pumpkolben (33) und Pumpzylinder (32) gebildete Kompressionsraum über ein zum Kompressionsraum öffnendes und als Drossel-Rückschlagventil (Ansaugventil) (38) mit der Außenluft oder mit einem Druckspeicher verbindbar ist.

8. Selbstpumpende Feder- und Dämpfereinheit (13) nach Anspruch 1 bis 7, **dadurch gekennzeichnet, dass** die Feder- und Dämpfereinheit (13) mindestens eine Ablasseinrichtung (39) aufweist, welche durch den durch das Ein- und Ausfedern des Fahrzeuges sich verändernden Abstand zwischen den Anlenkpunkten (14, 15) angetrieben und/oder gesteuert wird und eine Druckerniedrigung in dem Dämpfungs- und/oder Federungsmedium erzeugt, wodurch die Feder- und Dämpfereinheit (13) bei veränderlicher Zuladung des Fahrzeuges ein festgelegtes Niveau beibehält.

9. Selbstpumpende Feder- und Dämpfereinheit (13) nach Anspruch 8, **dadurch gekennzeichnet, dass** die Ablasseinrichtung (39) als Ablassventil mit einem in einem Ablasszylinder (41) verschiebbaren Ablasskolben (40) so ausgebildet ist, dass ein Ablassvolumen (42) als Ringvolumen zwischen Ablasskolben (40) und Ablasszylinder (41) entsteht.

10. Selbstpumpende Feder- und Dämpfereinheit (13) nach Anspruch 8 oder 9, **dadurch gekennzeichnet, dass** der Ablasskolben (40) einlassseitig und ablassseitig mindestens je einem Dichtring (43, 44) zur Abdichtung des Ringraumes / Ringvolumen (42) zwischen Ablasskolben (40) und Ablasszylinder (41) aufweist und der Ablasszylinder (41) als Dichtungssitz für den Ablasskolben (40) dient, wobei die Ablasseinrichtung (39) so ausgebildet ist, dass die einlassseitige Öffnung des Ablassvolumens (42) zu einem der Arbeitsräume (16) und die ablassseitige Öffnung des Ablassvolumens (42) zur Außenluft oder zu einem Druckspeicher durch die relative Verschiebung zwischen Ablasskolben (40) und Ablasszylinder (41) erfolgt.

11. Selbstpumpende Feder- und Dämpfereinheit (13) nach Anspruch 8 bis 10, **dadurch gekennzeichnet, dass** der Ablasskolben (40) durch die Stößelstange (34) gebildet wird und der Ablasszylinder (41) die Stößelstange (34) als Hülse umgibt, insbesondere als mindestens teilweise aufgeweitete Hülse.

12. Selbstpumpende Feder- und Dämpfereinheit (13) nach Anspruch 8 bis 11, **dadurch gekennzeichnet, dass** der als Hülse ausgebildete Ablasszylinder (41) einen elastischen Anschlag aufweist, welcher den Ablasszylinder (41) gegenüber einer Verschiebung des Ablasskolben (40) an der Kolbenstange (20) bzw. deren zugehörigen Bauteilen abstützt.

13. Selbstpumpende Feder- und Dämpfereinheit (13) nach Anspruch 12, **dadurch gekennzeichnet, dass** der elastischen Anschlag als eine die Stößelstange (34) umschließende konzentrische Anschlagplatte (46) ausgebildet ist, die mit einer Schraubenfeder (45) auf dem als Hülse ausgebildete Ablasszylinder (41) abgestützt ist.

14. Selbstpumpende Feder- und Dämpfereinheit (13) nach Anspruch 1 bis 13, **dadurch gekennzeichnet, dass** der beim Ein- und Ausfedern des Fahrzeuges sich verändernde Abstand zwischen den Pumpenteilen (32, 33), d.h. der Kompressionshub und die Länge der Verschiebung zwischen Ablasskolben (40) und Ablasszylinder (41) einstellbar sind.

15. Selbstpumpende Feder- und Dämpfereinheit (13) nach Anspruch 1 bis 14, **dadurch gekennzeichnet, dass** die Feder- und Dämpfereinheit (13) eine zweistufige Pumpe aufweist, welche durch den durch das Ein- und Ausfedern des Fahrzeuges sich verändernden Abstand zwischen den Anlenkpunkten (14, 15) angetrieben wird und eine Druckerhöhung in dem Dämpfungs- und/oder Federungsmedium erzeugt, wobei die zweistufige Pumpe so ausgebildet ist, dass die zweite Pumpenstufe erst dann angetrieben wird, wenn der Kompressionshub der erste Stufe der Pumpe bereits vollständig ausgenutzt ist.

16. Selbstpumpende Feder- und Dämpfereinheit (13) nach Anspruch 15, **dadurch gekennzeichnet, dass** die zwei Pumpenstufen in Reihe geschaltet sind und konzentrisch innerhalb der hohle Kolbenstange (20) angeordnet sind.

17. Selbstpumpende Feder- und Dämpfereinheit (13) nach Anspruch 15 oder 16, **dadurch gekennzeichnet, dass** der hohle Pumpkolben (33) der ersten Stufe als Pumpzylinder (51) dient, in dem der konzentrisch zur Kolbenstange (20) ausgebildete und einen dem Stößel (34) federnd verbundene und angetriebene Pumpkolben (50) der zweiten Stufe angeordnet ist.

18. Selbstpumpende Feder- und Dämpfereinheit (13) nach Anspruch 1 bis 17, **dadurch gekennzeichnet, dass** die Abmessungen der zwischen Stößel (34) und Kolben (33) angeordneten Schraubenfeder (35) und/oder die Abmessungen der Schraubenfeder (45) auf dem als Hülse ausgebildete Ablasszylinder (41) sowie die Abmessungen der Anschläge und Aufnahmen für diese Federn (35, 45) so ausgebildet sind, dass letztere als zusätzliche Federelemente zur Steigerung der Progression der Feder- und Dämpfereinheit (13) genutzt werden.

19. Verwendung einer zwischen zwei Anlenkpunkten (14, 15) an Karosserie und Fahrwerk eines Fahrzeuges angelenkten ein oder mehrstufigen Pumpe einer selbstpumpenden Feder- und Dämpfereinheit (13) nach Anspruch 1 bis 18 zur selbsttätigen und durch das Ein- und Ausfedern des Fahrzeuges angetriebenen Druckerzeugung innerhalb einer Druckversorgungsanlage für eine Niveauregulierung.

## Claims

1. Self-pumping spring and damper unit (13) with automatic ride level control for chassis of vehicles, in particular for motor vehicles or motorcycles (1), which is articulated at one articulation point (14) on the body and at the other articulation point (15) on the chassis and the spring or damping unit (13) of which has at least two working spaces (16, 17, 18) which are connectable by means of a throughflow throttle valve (26, 27) and which contain a damping and/or springing medium which, during the jounce and rebound of the vehicle, is exchanged, damped by the throttle valves (26, 27), between the working spaces (16, 17), the spring and damper unit (13) having at least one pump which is driven by the distance between the articulation points (14, 15) which varies as a result of the jounce and rebound of the vehicle, said pump generating a pressure rise in the damping and/or springing medium, with the result that the spring and damper unit (13) maintains a fixed level in the event of a variable load on the vehicle, the pump consisting essentially of two pump parts (32, 33) which are movable in relation to one another and reduce a compression space and of which one pump part (33) is connected to one articulation point (14) and the other pump part (32) to the other articulation point (15) such that the distance between the articulation points (14, 15) which varies during the jounce and rebound of the vehicle is transferred as a compression stroke to the distance of the pump parts (32, 33) from one another, an elastic connection element (35) being arranged between at least one pump part (33) and the associated articulation point (14) such that it at least partially compensates elastically the distance between the pump parts (32, 33) which varies during the jounce and rebound of the vehicle, **characterized in that** the spring and damper unit (13) is designed as a pneumatic spring and damper unit operated with compressed air, at least one of the working spaces (18) filled with compressed air being delimited at least partially by movable walls in the form of a concertina (22), and the concertina (22) rolling at least partially on the contours of rotationally symmetrical bodies (23).

2. Self-pumping spring and damper unit (13) according to Claim 1, **characterized in that** the pump is designed as a piston pump with a pumping piston (33) which is connected to the upper articulation point (14) and which is movable in a pumping cylinder (32) connected to the lower articulation point (15), so that the pressure rise takes place while the spring and damper unit (13) is in the pressure stage.

3. Self-pumping spring and damper unit (13) according to Claim 1 or 2, **characterized in that** the two working spaces (16, 17) are separated by a damper piston (25) displaceable in a damper cylinder (24), the damper cylinder (24) being connected to one articulation point (14) and the damper piston (25) being connected via a hollow piston wall (20) to the other articulation point (15), and the piston pump being designed within the hollow piston rod (20) such that the hollow piston rod (20) serves as a pumping cylinder (32) in which a pumping piston (33) designed concentrically with respect to the piston rod (20) and driven via a tappet (34) connected to the damper cylinder (24) is arranged.

4. Self-pumping spring and damper unit (13) according to Claims 1 to 3, **characterized in that** the elastic connection element is designed as a helical spring (35) arranged concentrically in the hollow piston rod (20) between the tappet (34) and piston (33).

5. Self-pumping spring and damper unit (13) according to Claims 1 to 4, **characterized in that** the pumping piston (33) has a throttle nonreturn valve (37) opening to one of the working spaces (16).

6. Self-pumping spring and damper unit (13) according to Claims 1 to 5, **characterized in that** the piston pump is provided with a stop (36) for limiting the pumping piston travel/ compression stroke.

7. Self-pumping spring and damper unit (13) according to Claims 1 to 6, **characterized in that** the compression space formed between the pumping piston (33) and pumping cylinder (32) is connectable to the outside air or to a pressure accumulator via an (intake valve) (38) opening to the compression space and as a throttle nonreturn valve.

8. Self-pumping spring and damper unit (13) according to Claims 1 to 7, **characterized in that** the spring and damper unit (13) has at least one let-down device (39) which is driven and/or controlled by the distance between the articulation points (14, 15) which varies as a result of the jounce and rebound of the vehicle, said let-down device generating a pressure lowering in the damping and/or springing medium, with the result that the spring and damper unit (13) maintains a fixed level in the event of a variable load on the vehicle.

9. Self-pumping spring and damper unit (13) according to Claim 8, **characterized in that** the let-down device (39) is designed as a let-down valve with a let-down piston (40) displaceable in a let-down cylinder (41), such that a let-down volume (42) as an annular volume between the let-down piston (40) and let-down cylinder (41) is obtained.

10. Self-pumping spring and damper unit (13) according to Claim 8 or 9, **characterized in that** the let-down piston (40) has on the inlet side and on the outlet side in each case at least one sealing ring (43, 44) for sealing of the annular space/annular volume (42) between the let-down piston (40) and let-down cylinder (41), and the let-down cylinder (41) serves as a sealing seat for the let-down piston (40), the let-down device (39) being designed such that the inlet-side opening of the let-down volume (42) to one of the working spaces (16) and the outlet-side opening of the let-down volume (42) to the outside air or to a pressure accumulator take place by means of the relative displacement between the let-down piston (40) and let-down cylinder (41).

11. Self-pumping spring and damper unit (13) according to Claims 8 to 10, **characterized in that** the let-down piston (40) is formed by the tappet rod (34) and the let-down cylinder (41) surrounds the tappet rod (34) as a sleeve, in particular as an at least partially widened sleeve.

12. Self-pumping spring and damper unit (13) according to Claims 8 to 11, **characterized in that** the let-down cylinder (41) designed as a sleeve has an elastic stop which supports the let-down cylinder (41) with respect to a displacement of the let-down piston (40) on the piston rod (20) or its associated components.

13. Self-pumping spring and damper unit (13) according to Claim 12, **characterized in that** the elastic stop is designed as a concentric stop plate (46) which surrounds the tappet rod (34) and which is supported by means of a helical spring (45) on the let-down cylinder (41) designed as a sleeve.

14. Self-pumping spring and damper unit (13) according to Claims 1 to 13, **characterized in that** the distance between the pump parts (32, 33) which varies during the jounce and rebound of the vehicle, that is to say the compression stroke and the length of displacement between the let-down piston (40) and let-down cylinder (41), is adjustable.

15. Self-pumping spring and damper unit (13) according to Claims 1 to 14, **characterized in that** the spring and damper unit (13) has a two-stage pump which is driven by the distance between the articulation points (14, 15) which varies as a result of the jounce and rebound of the vehicle, said pump generating a pressure rise in the damping and/or springing medium, the two-stage pump being designed such that the second pump stage is driven only when the compression stroke of the first stage of the pump is already fully utilized.

16. Self-pumping spring and damper unit (13) according to Claim 15, **characterized in that** the two pump stages are connected in series and are arranged concentrically within the hollow piston rod (20).

17. Self-pumping spring and damper unit (13) according to Claim 15 or 16, **characterized in that** the hollow pumping piston (33) of the first stage serves as a pumping cylinder (51) in which the pumping piston (50) of the second stage, designed concentrically with respect to the piston rod (20) and connected resiliently to and driven to the tappet (34), is arranged.

18. Self-pumping spring and damper unit (13) according to Claims 1 to 17, **characterized in that** the dimensions of the helical spring (35) arranged between the tappet (34) and piston (33) and/or the dimensions of the helical spring (45) on the let-down cylinder (41) designed as a sleeve and also the dimensions of the stops and receptacles for these springs (35, 45) are designed such that the latter are used as additional spring elements for increasing the progression of the spring and damper unit (13).

19. Use of a single-stage or multi-stage pump, articulated between two articulation points (14, 15) on the body and chassis of a vehicle, of a self-pumping spring and damper unit (13) according to Claims 1 to 18 for automatic pressure generation, driven by the jounce and rebound of the vehicle, within a pressure supply system for ride level control.

## Revendications

1. Unité de ressort et d'amortissement à auto-pompage (13), comprenant une régulation de niveau automatique pour châssis de véhicules, en particulier pour véhicules automobiles ou motocyclettes (1), qui est articulée à la carrosserie au niveau d'un point d'articulation (14) et au châssis au niveau de l'autre point d'articulation (15), et dont l'unité de ressort ou d'amortissement (13) présente au moins deux espaces de travail (16, 17, 18) pouvant être raccordés par un clapet d'étranglement (26, 27) pouvant être parcouru par l'écoulement, les espaces de travail contenant un fluide d'amortissement et/ou de suspension, qui, lors de la compression et de la détente des ressorts du véhicule, est échangé entre les espaces de travail (16, 17) de manière amortie par les clapets d'étranglement (26, 27), l'unité de ressort et d'amortissement (13) présentant au moins une pompe qui est entraînée par la variation de distance entre les points d'articulation (14, 15) provoquée par la compression et la détente des ressorts du véhicule, et qui génère une augmentation de pression dans le fluide d'amortissement et/ou de suspension de sorte que l'unité de ressort et d'amortissement (13), en cas de charge variable du véhicule, conserve un niveau fixe, la pompe étant constituée essentiellement de deux parties de pompe (32, 33) déplaçables l'une par rapport à l'autre et réduisant un espace de compression, dont une partie de pompe (33) est en liaison avec l'un des points d'articulation (14) et dont l'autre partie de pompe (32) est en liaison avec l'autre point d'articulation (15) de telle sorte que la variation de distance entre les points d'articulation (14, 15) lors de la compression et de la détente des ressorts du véhicule soit transmise en tant que course de compression à la distance entre les parties de pompe (32, 33), un élément de liaison élastique (35) étant disposé entre au moins une partie de pompe (33) et le point d'articulation associé (14), de telle sorte qu'il compense au moins en partie élastiquement la variation de distance entre les parties de pompe (32, 33) lors de la compression et de la détente des ressorts du véhicule, **caractérisée en ce que** l'unité de ressort et d'amortissement (13) est réalisée sous forme d'unité de ressort et d'amortissement pneumatique fonctionnant avec de l'air comprimé, au moins l'un des espaces de travail (18) remplis d'air comprimé étant limité au moins en partie par des parois mobiles en forme de soufflet roulant (22) et le soufflet roulant (22) roulant au moins en partie sur les contours de corps (23) à symétrie de révolution.

2. Unité de ressort et d'amortissement à auto-pompage (13) selon la revendication 1, **caractérisée en ce que** la pompe est réalisée sous forme de pompe à piston avec un piston de pompe (33) raccordé au point d'articulation supérieur (14), qui peut être déplacé dans un cylindre de pompe (32) raccordé au point d'articulation inférieur (15), de telle sorte que l'augmentation de pression s'effectue pendant que l'unité de ressort et d'amortissement (13) se trouve dans l'étage de compression.

3. Unité de ressort et d'amortissement à auto-pompage (13) selon la revendication 1 ou 2, **caractérisée en ce que** les deux espaces de travail (16, 17) sont séparés par un piston d'amortissement (25) pouvant être déplacé dans un cylindre d'amortissement (24), le cylindre d'amortissement (24) étant connecté à un point d'articulation (14) et le piston d'amortissement (25) étant connecté à l'autre point d'articulation (15) par le biais d'une tige de piston creuse (20), et la pompe à piston étant réalisée à l'intérieur de la tige de piston creuse (20) de telle sorte que la tige de piston creuse (20) serve de cylindre de pompe (32) dans lequel est disposé un piston de pompe (33) réalisé concentriquement par rapport à la tige de piston (20) et entraîné par le biais d'un poussoir (34) connecté au cylindre d'amortissement (24).

4. Unité de ressort et d'amortissement à auto-pompage (13) selon les revendications 1 à 3, **caractérisée en ce que** l'élément de liaison élastique est réalisé sous forme de ressort hélicoïdal (35) disposé concentriquement dans la tige de piston creuse (20) entre le poussoir (34) et le piston (33) .

5. Unité de ressort et d'amortissement à auto-pompage (13) selon les revendications 1 à 4, **caractérisée en ce que** le piston de pompe (33) présente un clapet antiretour d'étranglement (37) s'ouvrant vers l'un des espaces de travail (16).

6. Unité de ressort et d'amortissement à auto-pompage (13) selon les revendications 1 à 5, **caractérisée en ce que** la pompe à piston est pourvue d'une butée (36) pour limiter la course du piston de pompe/la course de compression.

7. Unité de ressort et d'amortissement à auto-pompage (13) selon les revendications 1 à 6, **caractérisée en ce que** l'espace de compression formé entre le piston de pompe (33) et le cylindre de pompe (32) peut être raccordé à l'air extérieur ou à un accumulateur de pression par le biais d'une (soupape d'entrée) (38) s'ouvrant vers l'espace de compression et sous forme de clapet antiretour d'étranglement.

8. Unité de ressort et d'amortissement à auto-pompage (13) selon les revendications 1 à 7, **caractérisée en ce que** l'unité de ressort et d'amortissement (13) présente au moins un dispositif de sortie (39) qui est entraîné et/ou commandé par la variation de distance entre les points d'articulation (14, 15), provoquée par la compression et la détente des ressorts du véhicule et génère une réduction de pression dans le fluide d'amortissement et/ou de suspension de sorte que l'unité de ressort et d'amortissement (13) conserve un niveau fixe en cas de charge variable du véhicule.

9. Unité de ressort et d'amortissement à auto-pompage (13) selon la revendication 8, **caractérisée en ce que** le dispositif de sortie (39) est réalisé sous forme de soupape de sortie avec un piston de sortie (40) pouvant être déplacé dans un cylindre de sortie (41) de telle sorte qu'un volume de sortie (42) se forme en tant que volume annulaire entre le piston de sortie (40) et le cylindre de sortie (41).

10. Unité de ressort et d'amortissement à auto-pompage (13) selon la revendication 8 ou 9, **caractérisée en ce que** le piston de sortie (40) présente, du côté de l'entrée et du côté de la sortie, à chaque fois au moins une bague d'étanchéité (43, 44) pour réaliser l'étanchéité de l'espace annulaire/du volume annulaire (32) entre le piston de sortie (40) et le cylindre de sortie (41), et le cylindre de sortie (41) sert de siège d'étanchéité pour le piston de sortie (40), le dispositif de sortie (39) étant réalisé de telle sorte que l'ouverture du côté de l'entrée du volume de sortie (42) vers l'un des espaces de travail (16) et que l'ouverture du côté de la sortie du volume de sortie (42) vers l'air extérieur ou vers un accumulateur de pression s'effectue par le déplacement relatif entre le piston de sortie (40) et le cylindre de sortie (41).

11. Unité de ressort et d'amortissement à auto-pompage (13) selon les revendications 8 à 10, **caractérisée en ce que** le piston de sortie (40) est formé par la tige de poussoir (34) et le cylindre de sortie (41) entoure la tige de poussoir (34) sous forme de manchon, en particulier sous forme de manchon au moins partiellement élargi.

12. Unité de ressort et d'amortissement à auto-pompage (13) selon les revendications 8 à 11, **caractérisée en ce que** le cylindre de sortie (41) réalisé sous forme de manchon présente une butée élastique qui supporte le cylindre de sortie (41) par rapport à un déplacement du piston de sortie (40) au niveau de la tige de piston (20) ou de ses composants associés.

13. Unité de ressort et d'amortissement à auto-pompage (13) selon la revendication 12, **caractérisée en ce que** la butée élastique est réalisée sous forme de plaque de butée concentrique (46) entourant la tige de poussoir (34), laquelle est supportée avec un ressort hélicoïdal (45) sur le cylindre de sortie (41) réalisé sous forme de manchon.

14. Unité de ressort et d'amortissement à auto-pompage (13) selon les revendications 1 à 13, **caractérisée en ce que** la variation de distance entre les parties de pompe (32, 33) lors de la compression et de la détente des ressorts du véhicule, c'est-à-dire la course de compression et la longueur du déplacement entre le piston de sortie (40) et le cylindre de sortie (41), peuvent être ajustées.

15. Unité de ressort et d'amortissement à auto-pompage (13) selon les revendications 1 à 14, **caractérisée en ce que** l'unité de ressort et d'amortissement (13) présente une pompe à deux étages, qui est entraînée par la variation de distance entre les points d'articulation (14, 15) provoquée par la compression et la détente des ressorts du véhicule, et génère une augmentation de pression dans le fluide d'amortissement et/ou de suspension, la pompe à deux étages étant réalisée de telle sorte que le deuxième étage de pompe soit seulement entraîné lorsque la course de compression du premier étage de la pompe est déjà complètement exploitée.

16. Unité de ressort et d'amortissement à auto-pompage (13) selon la revendication 15, **caractérisée en ce que** les deux étages de pompe sont montés en série et sont disposés concentriquement à l'intérieur de la tige de piston creuse (20).

17. Unité de ressort et d'amortissement à auto-pompage (13) selon la revendication 15 ou 16, **caractérisée en ce que** le piston de pompe creux (33) du premier étage sert de cylindre de pompe (51) dans lequel est disposé le piston de pompe (50) du deuxième étage, réalisé concentriquement à la tige de piston (20) et entraîné et connecté de manière élastique au poussoir (34).

18. Unité de ressort et d'amortissement à auto-pompage (13) selon les revendications 1 à 17, **caractérisée en ce que** les dimensions du ressort hélicoïdal (35) disposé entre le poussoir (34) et le piston (33) et/ou les dimensions du ressort hélicoïdal (45) sur le cylindre de sortie (41) réalisé sous forme de manchon ainsi que les dimensions des butées et des logements pour ces ressorts (35, 45) sont réalisées de telle sorte que ces derniers soient utilisés en tant qu'éléments de ressort supplémentaires pour augmenter la progression de l'unité de ressort et d'amortissement (13).

19. Utilisation d'une pompe à un ou plusieurs étages d'une unité de ressort et d'amortissement à auto-pompage (13) selon les revendications 1 à 18, articulée entre deux points d'articulation (14, 15) à la carrosserie et au châssis d'un véhicule, pour générer automatiquement une pression entraînée par la compression et la détente des ressorts du véhicule à l'intérieur d'une installation d'alimentation en pression pour une régulation de niveau.
